# EUROPÄISCHE PATENTSCHRIFT

(11) **EP 0 689 575 B1**
(45) Veröffentlichungstag und Bekanntmachung des Hinweises auf die Patenterteilung: **05.02.1997**
(21) Anmeldenummer: 94910377.4
(22) Anmeldetag: 07.03.1994
(51) Int. Cl.: C10L 1/00, C10M 171/00

(54) **ANTHRACHINONE ALS MARKIERUNGSMITTEL FÜR MINERALÖLE**
ANTHRAQUINONES AS MARKING AGENTS FOR MINERAL OILS
ANTHRAQUINONES UTILISEES COMME MARQUEURS DES HUILES MINERALES

(30) Priorität: 18.03.1993 DE 4308634
(43) Veröffentlichungstag der Anmeldung: 03.01.1996
(73) Patentinhaber: BASF AKTIENGESELLSCHAFT, 67056 Ludwigshafen (DE)
(72) Erfinder: RAULFS, Friedrich-Wilhelm, D-67061 Ludwigshafen (DE); VAMVAKARIS, Christos, D-67169 Kallstadt (DE)
(86) Internationale Anmeldenummer: EP9400673
(87) Internationale Veröffentlichungsnummer: WO9421752

(56) Entgegenhaltungen:
- EP-A- 0 481 519
- GB-A- 552 882
- US-A- 3 164 449
- US-A- 5 205 840
- K. VENKATARAMAN 'THE CHEMISTRY OF SYNTHETIC DYES' 1970 , ACADEMIC PRESS , NEW-YORK AND LONDON in der Anmeldung erwähnt BAND. 3 siehe Seite 394

## Beschreibung

Die vorliegende Erfindung betrifft die Verwendung von Anthrachinonen der Formel Ia 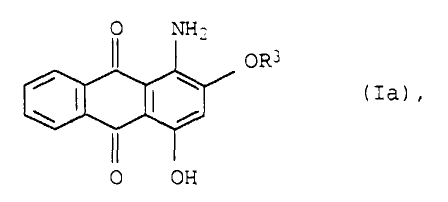 in der
- R³: C₁-C₁₈-Alkyl, das gegebenenfalls durch Hydroxy, Cyano oder Phenyl substituiert ist und durch 1 bis 3 Sauerstoffatome in Etherfunktion oder 1 bis 3 N-(C₁-C₄-Alkyl)iminogruppen unterbrochen sein kann, oder Phenyl, das gegebenenfalls durch C₁-C₄-Alkyl, Hydroxy, C₁-C₄-Alkoxy, (C₁-C₄-Mono- oder Dialkylcarbamoyl)-C₁-C₄-alkoxy oder C₁-C₈-Mono- oder Dialkylsulfamoyl, wobei hierbei die Alkylgruppen durch 1 bis 3 Sauerstoffatome in Etherfunktion unterbrochen sein können, substituiert ist, bedeutet,
zum Markieren von Mineralölen, mit den obengenannten Anthrachinonen markierte Mineralöle sowie Farbstoffmischungen, enthaltend einen öllöslichen Farbstoff und ein obengenanntes Anthrachinon.

Ein weiterer Gegenstand der vorliegenden Erfindung ist ein Verfahren zum Nachweis von Anthrachinonen der Formel Ib 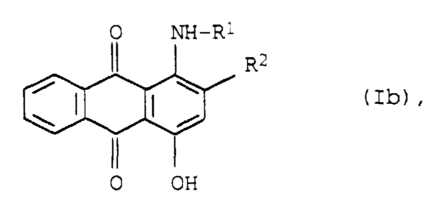 in der
- R¹: Wasserstoff, C₁-C₁₈-Alkyl, das gegebenenfalls durch Cyano substituiert ist, oder gegebenenfalls durch C₁-C₄-Alkyl, Hydroxy oder C₁-C₄-Alkoxy substituierter Phenyl und
- R²: Wasserstoff oder einen Rest der Formel X-R³ bedeuten, worin X für Sauerstoff oder Schwefel steht und R³ die obengenannte Bedeutung besitzt,
in Mineralölen, wobei man das Mineralöl mit einem wäßrig-alkalischen Medium behandelt.

Aus der EP-A-147 704 und EP-A-149 125 sind 1,4-Dihydroxyanthrachinone, die in Ringposition 2 eine substituierte Aminogruppe aufweisen, als Markierungsmittel für Mineralöle bekannt. Es hat sich jedoch gezeigt, daß die dort genannten Verbindungen in ihren anwendungstechnischen Eigenschaften nicht befriedigen. So zeigen sie beispielsweise eine ungenügende Alkalistabilität.

Aus der US-A-3 164 449 sind Farbstoffmischungen von N-substituierten 1-Hydroxy-4-aminoanthrachinonen bekannt, wobei als Substituenten die Hexadecyl-, Octadecyl-, Octadecenyl- und Octadecadienylgruppe in Betracht kommen. Diese Farbstoffmischungen werden, ebenso wie die in der GB-A-552 882 genannten Anthrachinone, als Farbstoffe zum Färben von Mineralölen verwendet. Ein Hinweis für die Anwendung als Markierstoffe wird dort jeweils nicht gegeben.

Aufgabe der vorliegenden Erfindung war es nun, neue Mittel zum Markieren von Mineralölen bereitzustellen. Die neuen Mittel sollten leicht zugänglich und gut in Mineralölen löslich sein. Außerdem sollten sie in einfacher Weise nachgewiesen werden können. Dabei sollten selbst noch sehr kleine Mengen an Markierstoff durch eine starke Farbreaktion sichtbar gemacht werden können. Schließlich sollte der Marker bei der alkalischen Nachweisreaktion über eine gute Stabilität verfügen.

Demgemäß wurde gefunden, daß sich die eingangs näher bezeichneten Anthrachinone der Formel Ia vorteilhaft zum Markieren von Mineralölen eignen.

Alle in den obengenannten Formeln Ia und Ib auftretenden Alkylreste können sowohl geradkettig als auch verzweigt sein.

Wenn in den obengenannten Formeln Ia und Ib substituierte Alkylgruppen auftreten, so weisen sie in der Regel 1 oder 2 Substituenten auf.

Wenn in den obengenannten Formeln Ia und Ib substituierte Phenylgruppen auftreten, so weisen sie in der Regel 1 bis 3 Substituenten auf.

Reste R¹ und R³ sind z.B. Methyl, Ethyl, Propyl, Isopropyl, Butyl, Isobutyl, sec-Butyl, Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl, Isodecyl, Undecyl, Dodecyl, Tridecyl, 3,5,5,7-Tetramethylnonyl, Isotridecyl (die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopadie der technischen Chemie, 4. Auflage, Band 7, Seiten 215 bis 217, sowie Band 11, Seiten 435 und 436), Tetradecyl, Pentadecyl, Hexadecyl, Heptadecyl, Octadecyl, Cyanomethyl, 2-Cyanoethyl, 2- oder 3-Cyanopropyl, 2- oder 4-Cyanobutyl, 5-Cyanopentyl, 6-Cyanohexyl, Phenyl, 2-, 3- oder 4-Methylphenyl, 2-, 3- oder 4-Ethylphenyl, 2,4-Dimethylphenyl, 2-, 3- oder 4-Hydroxyphenyl, 2,4-Dihydroxyphenyl, 2-, 3- oder 4-Methoxyphenyl, 2-, 3- oder 4-Ethoxyphenyl oder 2,4-Dimethoxyphenyl.

Reste R³ sind weiterhin z. B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 2- oder 4-Butoxybutyl, 2-Hydroxyethyl, 2-Hydroxypropyl, 3-Hydroxypropyl, 2-Hydroxybutyl, 4-Hydroxybutyl, 5-Hydroxypentyl, 6-Hydroxyhexyl, 5-Hydroxy-3-oxapentyl, Benzyl, 1-Phenylethyl, 2-Phenylethyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 3,6,8-Trioxadecyl, 3,6,9-Trioxaundecyl, 2-Dimethylaminoethyl, 2-Diethylaminoethyl, 2- oder 3-Dimethylaminopropyl, 2- oder 3-Diethylaminopropyl, 2- oder 4-Dimethylaminobutyl, 2- oder 4-Diethylaminobutyl, 3,6-Dimethyl-3,6-diazaheptyl, 3,6,9-Trimethyl-3,6,9-triazadecyl, 2-(1-Methoxyethoxy)ethyl, 2-(1-Ethoxyethoxy)ethyl, 2-(1-Isobutoxyethoxy)ethyl, 2- oder 3-(1-Methoxyethoxy)propyl, 2- oder 3-(1-Ethoxyethoxy)propyl, 2- oder 3-(1-Isobutoxyethoxy)propyl, 4-Mono- oder Dimethylsulfamoylphenyl, 4-Mono- oder Diethylsulfamoylphenyl, 4-Mono- oder Dipropylsulfamoylphenyl, 4-Mono- oder Diisopropylsulfamoylphenyl, 4-Mono- oder Dibutylsulfamoylphenyl, 4-(Mono-3-oxabutylsulfamoyl)phenyl, 4-(Mono-3-oxapentylsulfamoyl)phenyl, 4-(Mono-4-oxapentylsulfamoyl)phenyl, 4-(Mono-4-oxahexylsulfamoyl)phenyl, 3-Mono- oder Dimethylcarbamoylmethoxyphenyl, 3-Mono- oder Diethylcarbamoylmethoxyphenyl, 3-(2-Mono- oder Dimethylcarbamoylethoxy)phenyl oder 3-(2-Mono- oder Diethylcarbamoylethoxy)phenyl.

Bevorzugt werden Anthrachinone der Formel Ib, in der R² Wasserstoff oder einen Rest der Formel OR³, worin R³ die obengenannte Bedeutung besitzt, in Mineralölen nachgewiesen.

Besonders bevorzugt werden Anthrachinone der Formel Ib, in der R¹ Wasserstoff, C₁-C₁₈-Alkyl oder gegebenenfalls durch C₁-C₄-Alkyl, Hydroxy oder C₁-C₄-Alkoxy substituiertes Phenyl und R³ Wasserstoff bedeuten, in Mineralölen nachgewiesen.

Besonders bevorzugt werden weiterhin Anthrachinone der Formel Ib, in der R¹ Wasserstoff und R² einen Rest der Formel OR³, worin R³ die obengenannte Bedeutung besitzt, bedeuten, in Mineralölen nachgewiesen.

Ganz besonders hervorzuheben ist der Nachweis von Anthrachinonen der Formel Ib, in der R¹ Wasserstoff, C₁-C₄-Alkyl, Phenyl oder Methylphenyl und R² Wasserstoff bedeuten, in Mineralölen.

Ganz besonders hervorzuheben ist weiterhin der Nachweis von Anthrachinonen der Formel Ib, in der R¹ Wasserstoff und R² C₁-C₄-Alkoxy oder Phenoxy bedeuten, in Mineralölen.

Ganz besonders hervorzuheben ist weiterhin die Anwendung von Anthrachinonen der Formel Ia, in der R³ C₁-C₄-Alkyl oder Phenyl bedeutet, zum Markieren von Mineralölen.

Ein weiterer Gegenstand der vorliegenden Erfindung sind Mineralöle, enthaltend eines oder mehrere der Anthrachinone der Formel Ia.

Unter Mineralölen im erfindungsgemäßen Sinn sind beispielsweise Treibstoffe, wie Benzin, Kerosin oder Dieselöl, oder Öle, wie Heizöl oder Motorenöl, zu verstehen.

Die Anthrachinone der Formel Ia eignen sich insbesondere zum Markieren von Mineralölen, bei denen eine Kennzeichnung gefordert wird, z.B. aus steuerlichen Gründen. Um die Kosten der Kennzeichnung gering zu halten, strebt man dabei an, für die Markierung möglichst geringe Mengen an Markierungsmittel anzuwenden.

Zum Markieren von Mineralöl werden die Anthrachinone der Formel Ia entweder in Substanz oder in Form von Lösungen angewandt. Als Lösungsmittel eignen sich vorzugsweise aromatische Kohlenwasserstoffe, wie Toluol, Xylol, Dodecylbenzol, Diisopropylnaphthalin oder ein Gemisch höherer Aromaten, das unter dem Namen Shellsol® AB (Fa. Shell) handelsüblich ist. Üblicherweise können zur Verbesserung der Löslichkeit noch weitere Cosolventien, z.B. Alkohole, wie Methanol, Ethanol, Propanol, Isopropanol, Butanol, Isobutanol, Pentanol, Hexanol, Heptanol, Octanol, 2-Ethylhexanol oder Cyclohexanol, Glykole, wie Butylethylenglykol oder Methylpropylenglykol, Amine, wie Triethylamin, Diisooctylamin, Dicyclohexylamin, Anilin, N-Methylanilin, N,N-Dimethylanilin, Toluidin oder Xylidin, Alkanolamine, wie 3-(2-Methoxyethoxy)propylamin, o-Kresol, m-Kresol oder p-Kresol, Ketone, wie Diethylketon oder Cyclohexanon, Lactame, wie γ-Butyrolacton, Carbonate, wie Ethylencarbonat oder Propylencarbonat, Phenole, wie tert-Butylphenol oder Nonylphenol, Ester, wie Phthalsauremethylester, Phthalsäureethylester, Phthalsaure-(2-ethylhexyl)ester, Essigsäureethylester, Essigsäurebutylester oder Essigsäurecyclohexylester, Amide, wie N,N-Dimethylformamid, N,N-Diethylacetamid oder N-Methylpyrrolidon, oder deren Mischungen verwendet werden. Um eine hohe Viskosität der resultierenden Lösungen zu vermeiden, wählt man im allgemeinen eine Konzentration an Anthrachinon Ia von 1 bis 50 Gew.-%, vorzugsweise 10 bis 50 Gew.-%, jeweils bezogen auf die Lösung.

Ein weiterer Gegenstand der vorliegenden Erfindung sind Farbstoffmischungen, enthaltend einen öllöslichen Farbstoff und ein Anthrachinon der Formel Ia.

Die erfindungsgemäßen Farbstoffmischungen werden zweckmäßig in Form von Lösungen hergestellt und angewandt. Als Lösungsmittel eignen sich vorzugsweise die obengenannten Produkte. Um allerdings auch hier eine zu hohe Viskosität der resultierenden Lösungen zu vermeiden, wählt man ebenfalls die bereits genannten Konzentrationen an Farbstoff.

Zweckmäßig werden die Anthrachinone der Formel Ia und der öllösliche Farbstoff im Gewichtsverhältnis 10 : 1 bis 1 : 10 in den Lösungsmitteln gelöst. Im Prinzip ist das Verhältnis natürlich völlig frei wählbar. Die erfindungsgemäßen Mischungen können einen oder mehrere öllösliche Farbstoffe und eines oder mehrere Anthrachinone der Formel I enthalten.

Öllösliche Farbstoffe für die erfindungsgemäßen Mischungen sind z. B. die im Colour Index unter Solvent Dyes aufgeführten Verbindungen, die aus verschiedenen Farbstoffklassen stammen können. Die Wahl der öllöslichen Farbstoffe richtet sich nach dem gewünschten Farbton. Repräsentative Beispiele für öllösliche Farbstoffe sind die Farbstoffe der Formel II bis IX:

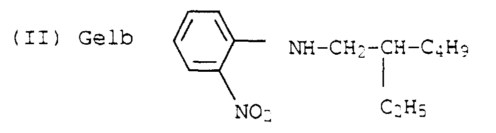

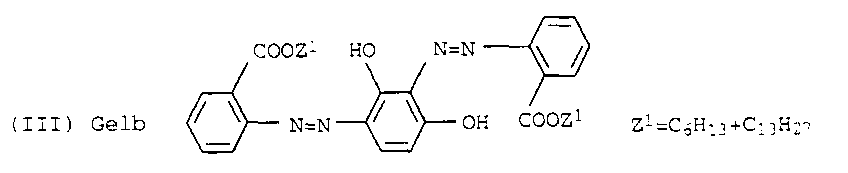

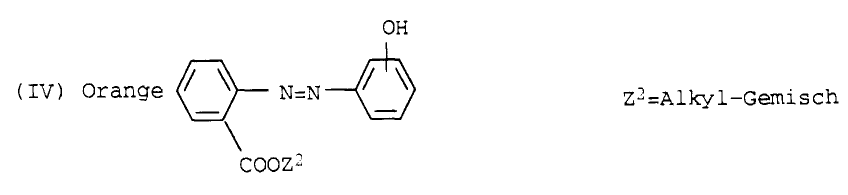

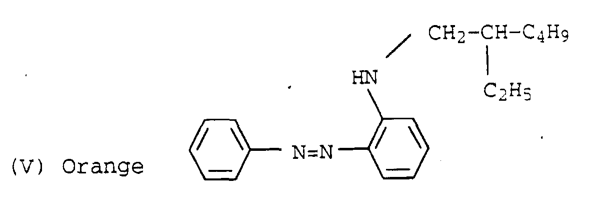

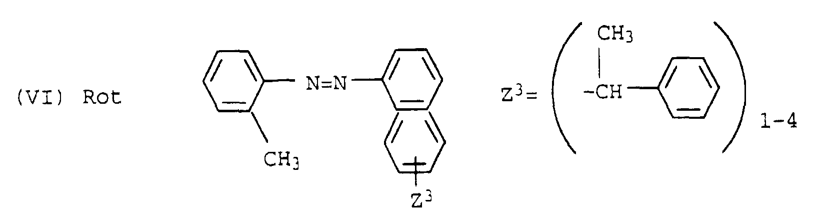

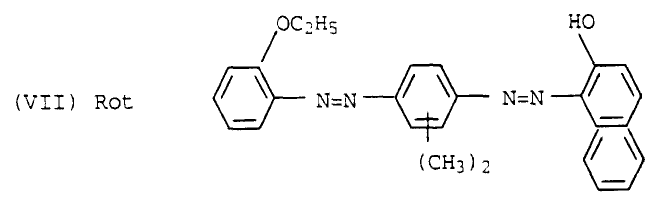

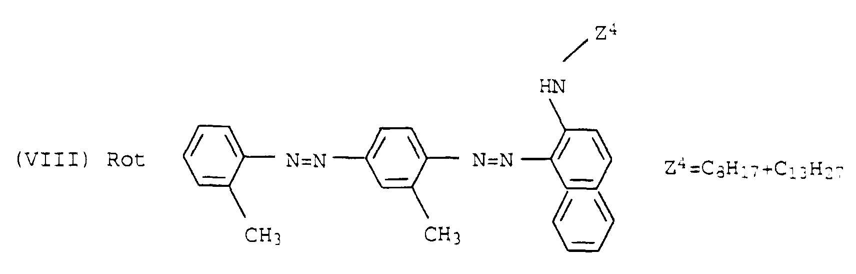

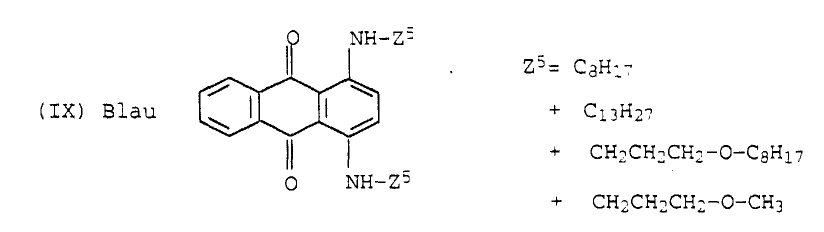

Weitere geeignete öllösliche Farbstoffe sind z. B. C.I. Solvent Yellow 14 (12 055), C.I. Solvent Yellow 16 (12 700), C.I. Solvent Yellow 56 (11 021), C.I. Solvent Orange 102, C.I. Solvent Red 1 (12 150), C.I. Solvent Red 19, C.I. Solvent Red 24 (26 105), C.I. Solvent Red 215 oder C.I. Solvent Blue 35 (61 554).

Die erfindungsgemäßen Mischungen haben den Vorteil, daß sie geeignet sind, Mineralöle gut sichtbar einzufärben und gleichzeitig als Markierungssubstanzen angewandt werden können.

Mittels den erfindungsgemäß anzuwendenden Anthrachinonen der Formel Ia gelingt es sehr einfach, markierte Mineralöle nachzuweisen, selbst wenn die Markierungssubstanzen nur in einer Konzentration von ungefähr 10 ppm oder darunter vorliegen. Dies gilt auch bei Anwendung der erfindungsgemäßen Farbstoffmischungen.

Wie eingangs bereits ausgeführt, gelingt der Nachweis der als Markierungsstoffe angewandten Anthrachinone der Formel Ib in Mineralölen gelingt vorteilhaft, wenn man das Mineralöl mit einem wäßrig-alikalischen Medium behandelt.

Bei Zusatz des wäßrig-alkalischen Mediums zum markierten Mineralöl resultiert eine deutlich sichtbare Farbreaktion unter Bildung eines Komplexes, wobei dieser in die wäßrige Phase übertritt.

Geeignete wäßrig-alkalische Medien für die Nachweisreaktion sind insbesondere wäßrige Lösungen von Alkalicarbonaten oder -hydroxiden. Beispielsweise wäßrige Natrium- oder Kaliumcarbonatlösungen oder Natron- oder Kalilauge. Der Gehalt an Alkalicarbonat oder -hydroxid in der wäßrigen Lösung beträgt dabei in der Regel 1 bis 10 Gew.-%, bezogen auf das Gewicht der Lösung.

In manchen Fällen kann es auch von Vorteil sein, dem wäßrig-alkalischen Medium in untergeordneten Mengen (im allgemeinen bis zu 20 %) noch Lösungsvermittler, z. B. N-Methylpyrrolidon, Methanol, Ethanol, Propanol, 1-Methoxypropan-2-ol, Glycerin, Ethylenglykol, Diethylenglykol, Nonylphenol oder mit Wasser mischbare Amine, beispielsweise Alkanolamine, wie Diethanolamin oder Triethanolamin, zuzusetzen.

Die Anthrachinone der Formeln Ia und Ib sind an sich bekannt. Es handelt sich bei ihnen um Dispersionsfarbstoffe zum Färben oder Bedrucken von Textilien. Beispielhaft seien C.I. Disperse Red 4 (60 755), C.I. Disperse Red 15 (60 710), C.I. Disperse Blue 22 (60 715), C.I. Disperse Violet 13 (60 725) oder C.I. Disperse Violet 27 (60 724) genannt. Weitere Angaben finden sich z. B. in K. Venkataraman "The Chemistry of Synthetic Dyes" Vol. 2, S. 805, oder Vol. 3, Seiten 391 bis 396.

Die erfindungsgemäß zur Anwendung gelangenden Anthrachinone können auf einfache Weise in Mineralölen nachgewiesen werden. Bei der im alkalischen Milieu ablaufenden Nachweisreaktion zeigen sie eine hohe Alkalistabilität.

Die folgenden Beispiele sollen die Erfindung näher erläutern.

### Beispiel 1

100 ml Mineralöl, das 10 ppm 1-Amino-2-methoxy-4-hydroxyanthrachinon enthielt, wurde mit 5 ml einer Mischung aus 10 gew.-%iger Natronlauge und N-Methylpyrrolidon (5:1 v/v) intensiv geschüttelt. Die untere wäßrige Phase färbte sich dabei violett, während sich die organische Phase entfärbte.

Nach zweitägigem Stehen bei Raumtemperatur waren, wie aus photometrischen Messungen hervorging, noch 95 % des Farbstoffkomplexes in der wäßrigen Phase vorhanden.

In analoger Weise können die in der folgenden Tabelle aufgeführten Anthrachinone nachgewiesen werden.

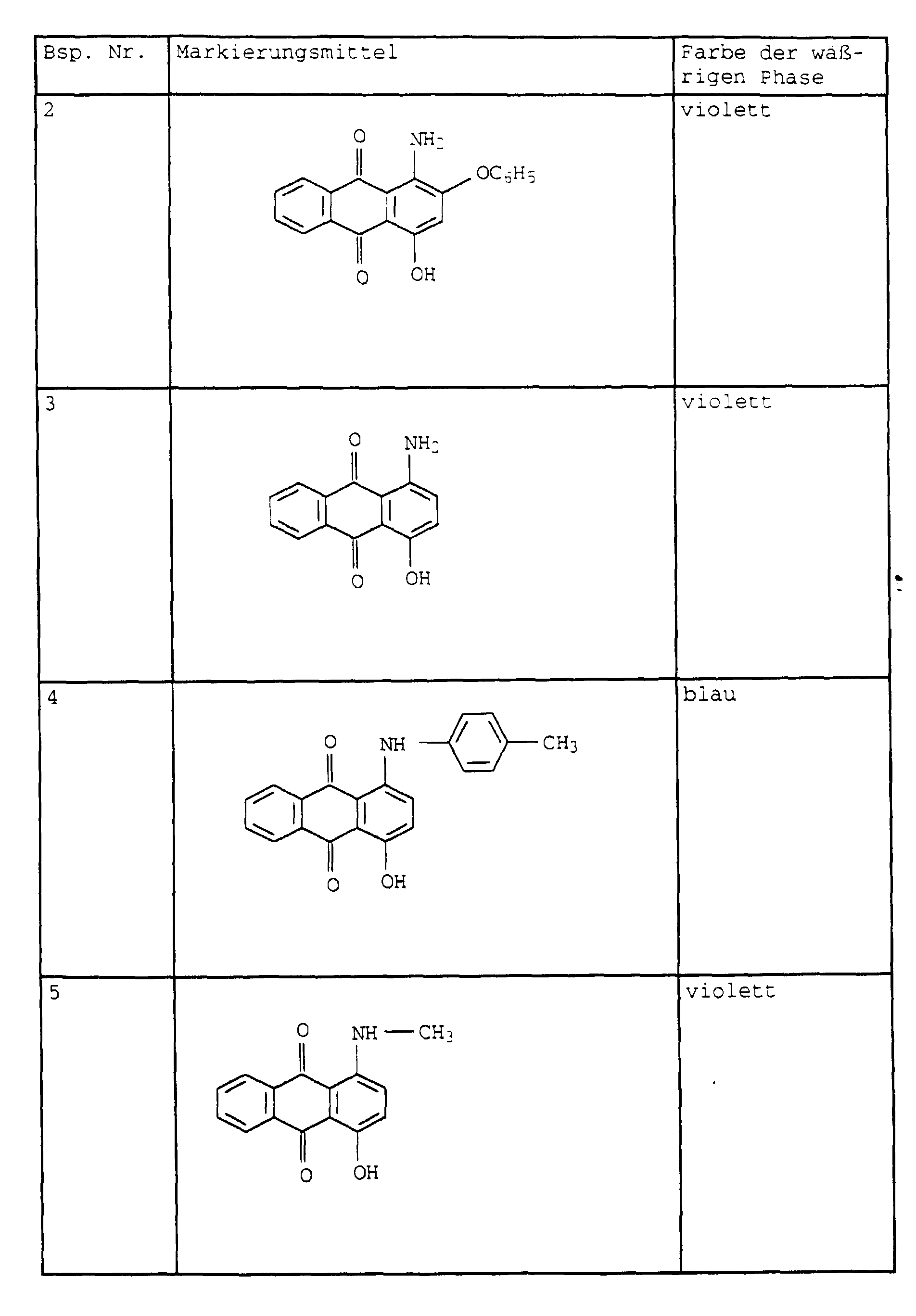

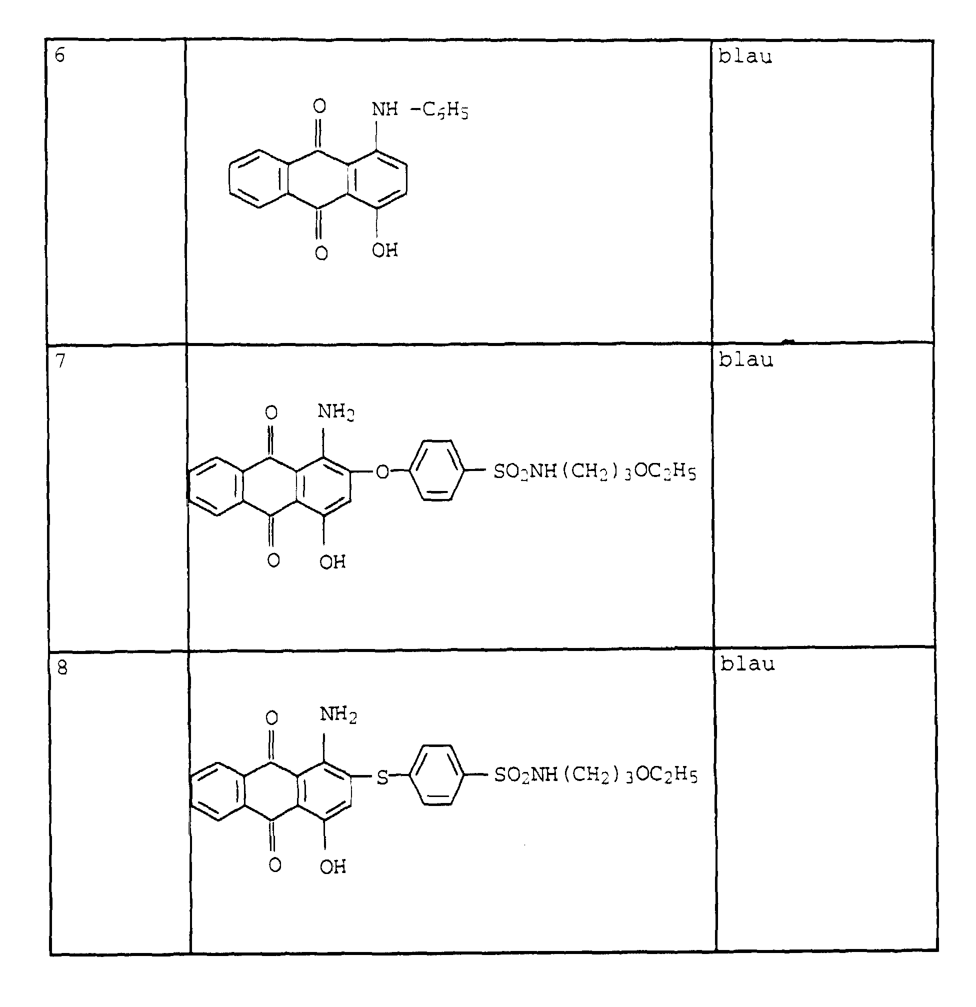

## Patentansprüche

1. Verwendung von Anthrachinonen der Formel Ia 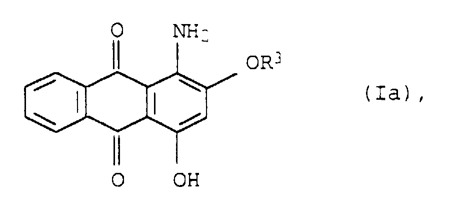 in der
R³ C₁-C₁₈-Alkyl, das gegebenenfalls durch Hydroxy, Cyano oder Phenyl substituiert ist und durch 1 bis 3 Sauerstoffatome in Etherfunktion oder 1 bis 3 N-(C₁-C₄-Alkyl)iminogruppen unterbrochen sein kann, oder Phenyl, das gegebenenfalls durch C₁-C₄-Alkyl, Hydroxy, C₁-C₄-Alkoxy, (C₁-C₄-Mono- oder Dialkylcarbamoyl)-C₁-C₄-alkoxy oder C₁-C₈-Mono- oder Dialkylsulfamoyl, wobei hierbei die Alkylgruppen durch 1 bis 3 Sauerstoffatome in Etherfunktion unterbrochen sein können, substituiert ist, bedeutet,
zum Markieren von Mineralölen.

2. Verwendung von Anthrachinonen nach Anspruch 1, dadurch gekennzeichnet, daß R³ C₁-C₄-Alkyl oder Phenyl bedeutet.

3. Mineralöle, enthaltend eines oder mehrere Anthrachinone der Formel Ia gemäß Anspruch 1.

4. Farbstoffmischungen, enthaltend einen öllöslichen Farbstoff und ein Anthrachinon der Formel Ia gemäß Anspruch 1.

5. Verfahren zum Nachweis von Anthrachinonen der Formel Ib 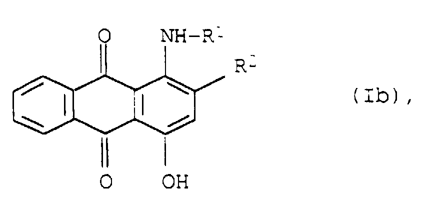 in der
R¹ Wasserstoff, C₁-C₁₈-Alkyl, das gegebenenfalls durch Cyano substituiert ist, oder gegebenenfalls durch C₁-C₄-Alkyl, Hydroxy oder C₁-C₄-Alkoxy substituiertes Phenyl und
R² Wasserstoff oder einen Rest der Formel X-R³ bedeuten, worin X für Sauerstoff oder Schwefel und R³ für C₁-C₁₈-Alkyl, das gegebenenfalls durch Hydroxy, Cyano oder Phenyl substituiert ist und durch 1 bis 3 Sauerstoffatome in Etherfunktion oder 1 bis 3 N-(C₁-C₄-Alkyl)iminogruppen unterbrochen sein kann, oder Phenyl, das gegebenenfalls durch C₁-C₄-Alkyl, Hydroxy, C₁-C₄-Alkoxy, (C₁-C₄-Mono- oder Dialkylcarbamoyl)-C₁-C₄-alkoxy oder C₁-C₈-Mono- oder Dialkylsulfamoyl, wobei hierbei die Alkylgruppen durch 1 bis 3 Sauerstoffatome in Etherfunktion unterbrochen sein können, substituiert ist, stehen,
in Mineralölen, dadurch gekennzeichnet, daß man das Mineralöl mit einem wäßrig-alkalischen Medium behandelt.

## Claims

1. Use of an anthraquinone of the formula Ia 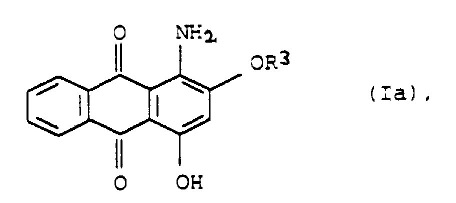 where
R³ is C₁-C₁₈-alkyl which is unsubstituted or substituted by hydroxyl, cyano or phenyl and may be interrupted by from 1 to 3 ether oxygen atoms or from 1 to 3 N-(C₁-C₄-alkyl)-imino groups or is phenyl which is unsubstituted or substituted by C₁-C₄-alkyl, hydroxyl, C₁-C₄-alkoxy, (C₁-C₄-mono- or dialkylcarbamoyl)-C₁-C₄-alkoxy or C₁-C₈-mono- or dialkylsulfamoyl, where the alkyl groups may be interrupted by from 1 to 3 ether oxygen atoms,
for marking mineral oils.

2. Use of an anthraquinone as claimed in claim 1, wherein R³ is C₁-C₄-alkyl or phenyl.

3. A mineral oil containing one or more anthraquinones of the formula Ia as claimed in claim 1.

4. A dye mixture containing an oil-soluble dye and an anthraquinone of the formula Ia as claimed in claim 1.

5. A method of detecting an anthraquinone of the formula Ib 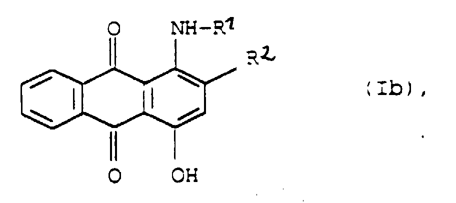 where
R¹ is hydrogen, C₁-C₁₈-alkyl which is unsubstituted or substituted by cyano, or phenyl which is unsubstituted or substituted by C₁-C₄-alkyl, hydroxyl or C₁-C₄-alkoxy, and
R² is hydrogen or a radical of the formula X-R³, where X is oxygen or sulfur and R³ is C₁-C₁₈-alkyl which is unsubstituted or substituted by hydroxyl, cyano or phenyl and may be interrupted by from 1 to 3 ether oxygen atoms or from 1 to 3 N-(C₁-C₄-alkyl)-imino groups or is phenyl which is unsubstituted or substituted by C₁-C₄-alkyl, hydroxyl, C₁-C₄-alkoxy, (C₁-C₄-mono- or dialkylcarbamoyl)-C₁-C₄-alkoxy or C₁-C₈-mono- or dialkylsulfamoyl, where the alkyl groups may be interrupted by from 1 to 3 ether oxygen atoms,
in a mineral oil, which comprises treating the latter with an aqueous alkaline medium.

## Revendications

1. Utilisation d'anthraquinones de formule Ia 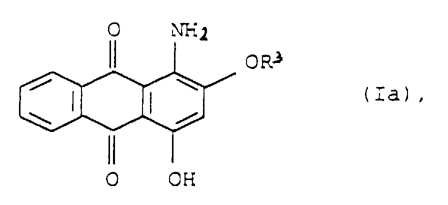 dans laquelle
R³ représente un reste alkyle en C₁-C₁₈ qui est éventuellement substitué par un groupement hydroxy, cyano ou phényle et peut être interrompu par 1 à 3 atomes d'oxygène en fonction éther ou 1 à 3 groupements N-(alkyl en C₁-C₄)imino, ou un reste phényle qui est éventuellement substitué par un groupement alkyle en C₁-C₄, hydroxy, alcoxy en C₁-C₄, mono- ou di(alkyl en C₁-C₄)carbamoyl(alcoxy en C₁-C₄) ou mono- ou di(alkyl en C₁-C₈)sulfamoyle, les groupements alkyle pouvant être interrompus par 1 à 3 atomes d'oxygène en fonction éther,
pour le marquage d'huiles minérales.

2. Utilisation d'anthraquinones selon la revendication 1, caractérisée en ce que R³ représente un reste alkyle en C₁-C₄ ou phényle.

3. Huiles minérales, contenant une ou plusieurs anthraquinones de formule Ia selon la revendication 1.

4. Mélanges de colorants, contenant un colorant soluble dans les huiles et une anthraquinone de formule Ia selon la revendication 1.

5. Procédé pour déceler dans des huiles minérales des anthraquinones de formule Ib 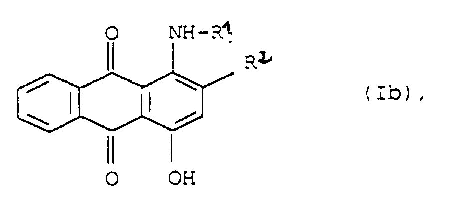 dans laquelle
R¹ représente un atome d'hydrogène, un reste alkyle en C₁-C₁₈, qui est éventuellement substitué par un groupement cyano, ou un reste phényle éventuellement substitué par un groupement alkyle en C₁-C₄, hydroxy ou alcoxy en C₁-C₄, et
R² représente un atome d'hydrogène ou un reste de formule X-R³ dans laquelle X est mis pour un atome d'oxygène ou de soufre et R³ est mis pour un reste alkyle en C₁-C₁₈ qui est éventuellement substitué par un groupement hydroxy, cyano ou phényle et peut être interrompu par 1 à 3 atomes d'oxygène en fonction éther ou 1 à 3 groupements N-(alkyl en C₁-C₄)imino, ou pour un reste phényle qui est éventuellement substitué par un groupement alkyle en C₁-C₄, hydroxy, alcoxy en C₁-C₄, mono- ou di(alkyl en C₁-C₄)carbamoyl(alcoxy en C₁-C₄)ou mono- ou di(alkyl en C₁-C₈)sulfamoyle, les groupements alkyle pouvant être interrompus par 1 à 3 atomes d'oxygène en fonction éther,
caractérisé en ce que l'huile minérale est traitée par un milieu aqueux alcalin.
